# Europäisches Patentamt
## European Patent Office
## Office européen des brevets

(19)

(11) Numéro de publication: **0 196 058**
**B1**

(12) **FASCICULE DE BREVET EUROPÉEN**

(45) Date de publication du fascicule du brevet:
02.11.88

(21) Numéro de dépôt: **86104073.1**

(22) Date de dépôt: **25.03.86**

(51) Int. Cl.⁴: **F 02 M 31/06,** G 05 D 23/13

(54) Mélangeur de l'air d'admission d'un moteur à combustion interne.

(30) Priorité: **27.03.85 FR 8504581**

(43) Date de publication de la demande:
**01.10.86 Bulletin 86/40**

(45) Mention de la délivrance du brevet:
**02.11.88 Bulletin 88/44**

(84) Etats contractants désignés:
**DE FR GB IT NL SE**

(56) Documents cité:
**DE-A-2 716 512**
**DE-A-2 755 086**
**FR-A-1 586 462**

(73) Titulaire: **TECAFILTRES, Société Anonyme dite:,**
**Tour Corosa 44, avenue de Chatou, F-92508 Reuil-**
**Malmaison (FR)**

(72) Inventeur: **Noireaux, Marcel, 3d rue Eugène Varlin,**
**F-91270 Vigneux Sur Seine (FR)**

(74) Mandataire: **Weinmiller, Jürgen, Lennéstrasse 9**
**Postfach 24, D-8133 Feldafing (DE)**

LIBER, STOCKHOLM 1988

EP 0 196 058 B1

## Description

La présente invention concerne un mélangeur de l'air d'admission d'un moteur à combustion interne pour automobile selon le préambule de la revendication 1.

Un tel mélangeur est connu, par exemple à partir du document DE-A-2 755 086. Au démarrage du moteur, c'est souvent de l'air chaud uniquement qui est admis ; puis un équilibre s'établit entre l'air frais collecté vers l'avant de la voiture et l'air chaud capté dans la zone de l'échappement des gaz brûlés, par les mouvements du volet du mélangeur d'air. Lorsqu'un effort soudain est demandé au moteur, c'est de l'air relativement frais qui est recherché.

De manière générale, on souhaite que la masse d'air qui se mélange à l'essence ait une température constante et donne une bonne combustion des gaz et donc un bon rendement au moteur.

On connaît un mélangeur d'air automatique à volet débrayable contrôlé par deux sondes différentes de prise de température: l'une est constituée d'un bi-lames, l'autre d'une capsule à cire mélangée à de la poudre de bronze. L'emploi d'une sonde de température à bi-lames conduit à la placer près du carburateur, par exemple dans une coiffe de carburateur ; de plus cela impose une liaison par des tubes chargés d'amener la force de dépression du moteur au moteur à dépression du mélangeur qui commande le volet d'arrivée d'air chaud ou d'air froid. Il en résulte un dispositif complexe, encombrant et coûteux.

La présente invention a pour but de réaliser un mélangeur d'air plus compact et plus économique que les dispositifs connus.

Ce but est atteint par un mélangeur tel que défini par la revendication 1.

Selon un mode de réalisation préférentiel les sondes sont choisies de manière que $t_1$ et $t_2$ soient respectivement égales à 10°C et 15°C et que $t_3$ et $t_4$ soient respectivement égales à 22°C et 26°C.

L'invention sera décrite ci-après plus en détail à l'aide d'un mode de réalisation donné à titre d'exemple non limitatif.

Dans le dessin annexé:
- La figure 1 est une vue très schématique d'un mélangeur d'air selon l'invention associé à un moteur.
- La figure 2 montre une vue d'ensemble semi-coupée du mélangeur d'air selon l'invention.
- La figure 3 est une vue semi-coupée d'un détail du mélangeur d'air de la figure 2.
- les figures 4 et 5 montrent schématiquement deux états du mélangeur d'air selon l'invention, lorsque la température extérieure est inférieure à une température $t_1$ (10°C par exemple),
- les figures 6 et 7 montrent schématiquement deux états du mélangeur d'air selon l'invention, lorsque la température extérieure est supérieure à une température $t_2$ (15°C par exemple),
- la figure 8 est un schéma analogue aux schémas des figures 4 à 7, lorsque la température extérieure est comprise entre $t_7$ et $t_2$.

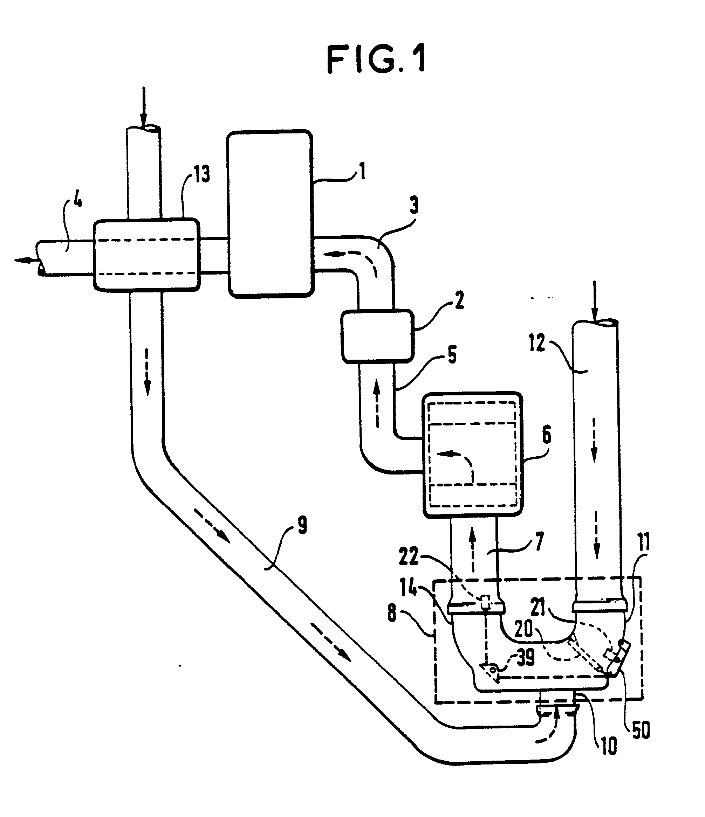

On a représenté dans la figure 1 très schématiquement un moteur à combustion interne 1 avec sa tubulure d'admission d'air 3 èt son tuyau d'échappement 4. L'air entrant dans la tubulure d'admission 3 est issu d'un carburateur 2 dont l'entrée est reliée par une tubulure 5 à un filtre à air 6. L'objet de la présente invention est le dispositif mélangeur d'air 8 dont la tubulure de sortie 14 alimente l'entrée 7 du filtre à air 6.

Ce mélangeur d'air comporte une tubulure d'entrée d'air chaud 10 alimentée par un tuyau 9 dont l'entrée est une prise d'air 13 sur le tuyau d'échappement 4. Il comporte par ailleurs une tubulure d'entrée d'air frais 11, alimentée par un tuyau 12 dont l'entrée est extérieure au véhicule.

Afin d'éviter tout givrage du carburateur 2, et d'assurer une température adéquate à l'air mélangé, un volet commandable 20 obture la tubulure 11 d'entrée d'air frais. La commande, qui va être explicitée plus loin, est assurée par l'intermédiaire de deux sondes de même type 21 et 22 respectivement situées dans la tubulure d'entrée d'air frais 11, et dans la tubulure d'air mélangé 14.

Les deux sondes 21 et 22 sont des éléments à cire dilatables avec la température. Cette cire est un liquide très visqueux dont la dilatation se manifeste extérieurement par la course d'une aiguille 31, 32.

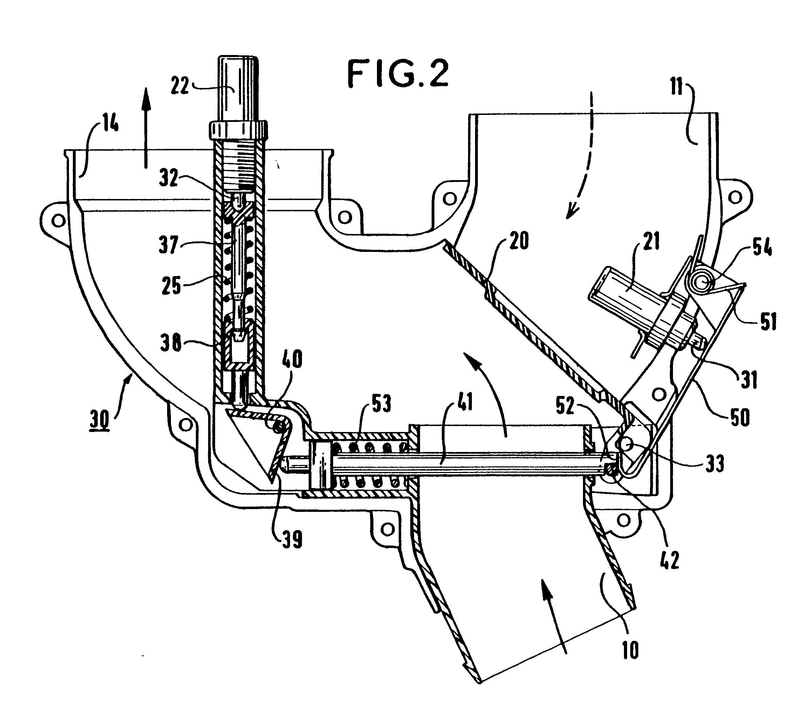

Le mélangeur d'air selon l'invention apparaît plus en détail en coupe dans la figure 2. Il est constitué de deux demi-coquilles dont l'une, la coquille 30, est visible sur la figure, ainsi que les tubulures 10, 11 et 14.

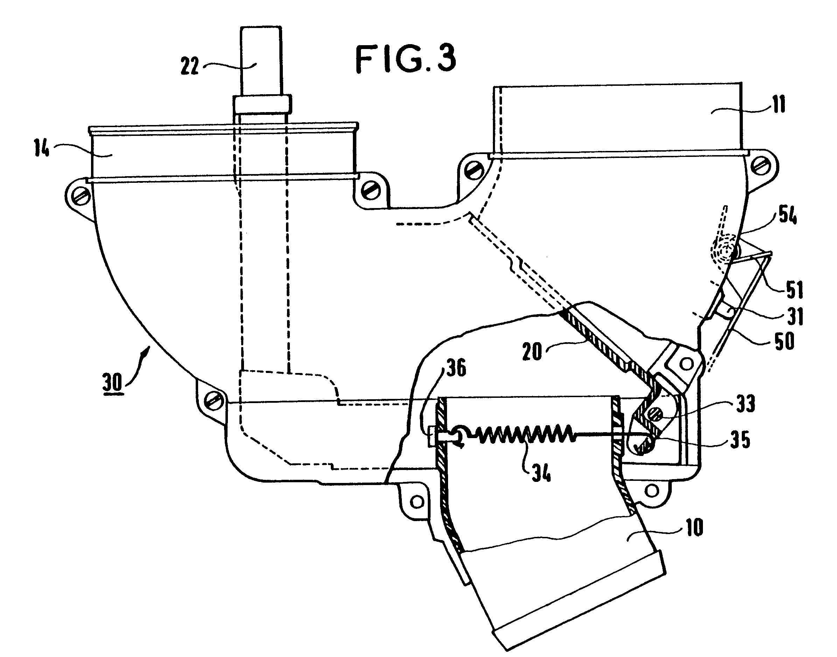

Le volet 20 est maintenu dans l'état illustré par la figure 2, c'est-à-dire en position d'obturation de la tubulure d'air frais 11, grâce à un ressort de rappel 34 visible sur la figure 3. Ce ressort est fixé en 35 et 36 dans les parois de la tubulure 10. Toutefois, ce volet peut pivoter autour de son axe 33 dans certaines conditions grâce au dispositif qui va être décrit.

Pour cela on met en oeuvre dans la tubulure d'air mélangé 14 la sonde à cire dilatable 22 dont l'aiguille 32 possède une course de 6 mm environ, lorsque la température de l'air qui l'environne est comprise entre 22°C et 26°C. Pour des températures comprises entre 26°C et 90°C, la course supplémentaire est de 5,5 mm environ. L'aiguille 32 agit sur une tige 37 qui est guidée à l'intérieur d'un poussoir creux 38. Un ressort 25 entourant la tige 37 transmet les mouvements de l'aiguille 32 à la périphérie du poussoir 38 ; ce dernier agit lui-même sur une équerre 39 pivotant autour d'un axe 40 et agissant sur un second poussoir 41 associé à un ressort 53. L'extrémité de ce poussoir 41 porte une échancrure pour loger un axe 42 du volet 20, parallèle à son axe de rotation 33. Une action du poussoir 41 sur l'axe 42 a pour effet de faire tourner le volet 20 autour de son axe 33.

La seconde sonde 21 à cire dilatable, située dans la tubulure d'air frais 11, est telle que son aiguille 31 possède une course de 3 mm environ, lorsque la température de l'air qui l'environne est comprise entre 10°C et 15°C. Cette aiguille 31 coopère avec un levier 50 dont une extrémité est attachée à la coquille 30 par un axe 54 et un ressort de torsion 51, et dont l'autre extrémité en forme de crochet 52 vient en appui sur l'extrémité du poussoir 41 et sur l'axe 42 du volet 20.

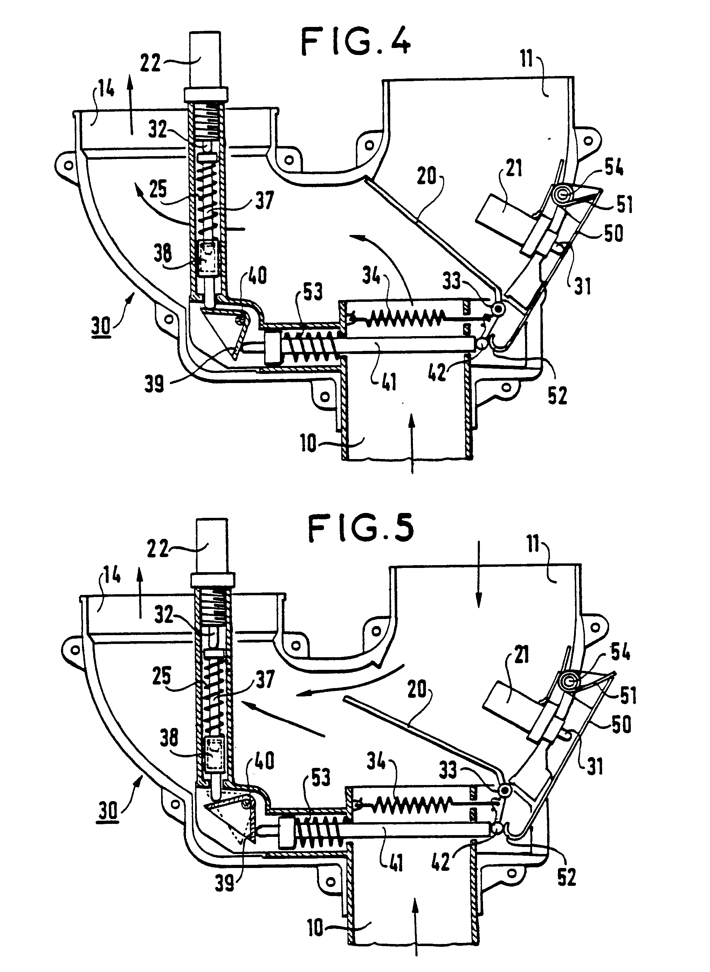

Le fonctionnement du dispositif selon l'invention va être explicité ci-dessous à l'aide des figures 4 à 8, reprenant schématiquement les éléments essentiels de la figure 2 dans différentes positions.

La figure 4 correspond au démarrage d'une voiture lorsque la température de l'air extérieur t est inférieure à $t_1 = 10°C$. La sonde 21 n'a aucune action. Le crochet 52 du levier 31 s'appuie sur l'axe 42 et sur l'extrémité du poussoir 41. Le volet 20 ferme la tubulure d'air frais 11. Seul l'air réchauffé par la mise en action du moteur, et arrivant par la tubulure 10, alimente le mélangeur; tant que la température de l'air mélangé dans la tubulure 14 n'atteint pas 22°C, la sonde 22 est sans effet et le volet 20 reste dans sa position de fermeture quelles que soient les charges demandées au moteur 1 du véhicule.

La figure 5 illustre toujours le cas où l'air extérieur de la tubulure 11 est inférieure à $t_1 = 10°C$, mais où la température de l'air mélangé a atteint une valeur égale à 24°C dans la tubulure 14. L'aiguille 32 sort de la sonde 22, et agit par l'intermédiaire du ressort 25 sur le poussoir 38, l'équerre 39 et le poussoir 41. L'aiguille 33 de la sonde 22 ne bouge pas et le crochet 52 reste en appui sur l'extrémité du poussoir 41 et sur l'axe 42. Le basculement du volet 20 est donc directement lié à la température de l'air de la tubulure 14, quelles que soient les charges demandées au moteur 1 du véhicule.

En conséquence, malgré la température basse de l'air extérieur, il n'y a aucun risque de givrage du carburateur 2.

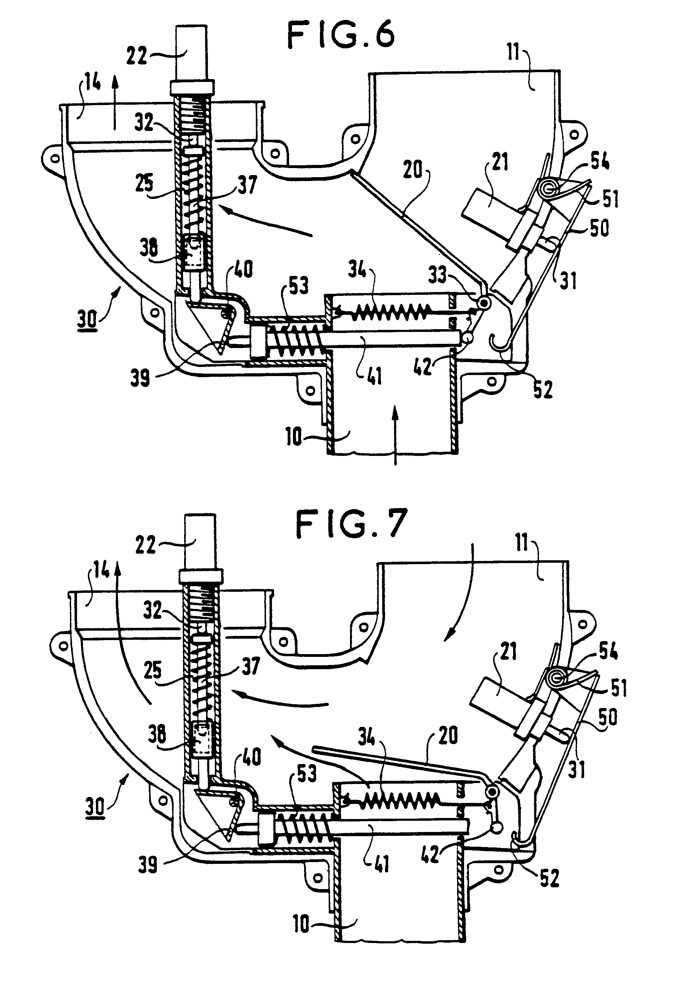

Les figures 6 et 7 correspondent aux conditions climatiques suivantes: la température de l'air extérieur, et donc dans la tubulure 11, est supérieure à $t_2 = 15°C$. L'aiguille 31 de la sonde 21 repousse le levier 50, et par conséquent écarte le crochet 52 de l'extrémité du poussoir 41 et de l'axe 42 du volet 20.

Aux faibles charges du moteur 1 et dans les limites des températures de consigne de la sonde 22 ($t_3 = 22°C$ à $t_4 = 26°C$) le volet 20 continue à obturer la tubulure 11.

En cas de fortes charges du moteur 1 (cas de la figure 7), il se produit une différence de perte de charge entre la tubulure d'air chaud 10 et la tubulure d'air froid 11 ; le volet 20 sollicité par le passage de l'air extérieur bascule pour réduire le passage de l'air chaud, ce qui permet d'admettre de l'air mélangé à une température inférieure à 26°C améliorant le rendement du moteur 1.

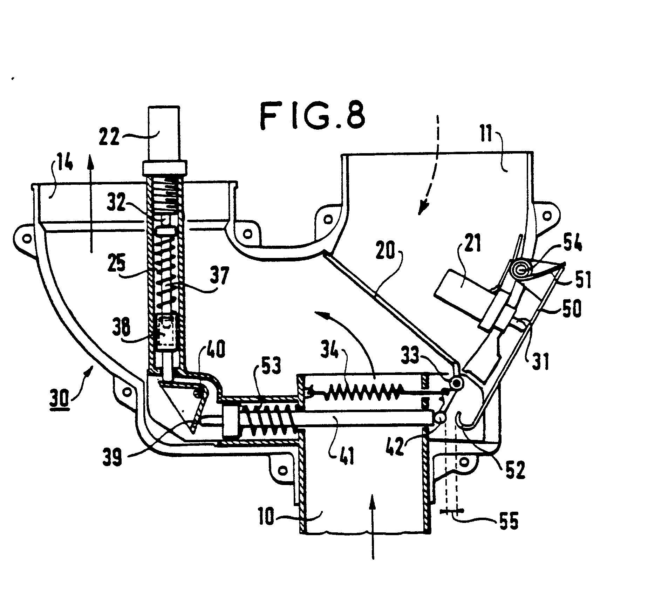

La figure 8 illustre le cas où la température de l'air extérieur, et donc dans la tubulure 11, est comprise entre $t_1$ et $t_2$ (entre 10°C et 15°C). L'aiguille 31 de la sonde 21 sort progressivement en fonction de la température, écarte légèrement le crochet 52 de l'axe 42 du volet 20 et permet donc un débrayage partiel de ce volet, schématisé par la référence 55. C'est la sonde 22 qui commande alors l'ouverture de ce volet.

Dans tous les cas de figures précédents, si la température dans la tubulure 14 devient supérieure à 26°C, l'aiguille 32 continue à sortir de la sonde et elle continue sa course à l'intérieur du poussoir creux 38.

Bien entendu, les valeurs de $t_1$, $t_2$, $t_3$, $t_4$ n'ont été données qu'à titre d'exemple.

Le mélangeur d'air selon l'invention forme un ensemble compact sans aucune liaison avec la dépression du moteur. On pourra le disposer très éloigné du carburateur pour une raison d'environnement par exemple. On choisira les températures $t_1$ à $t_4$ en tenant compte d'une éventuelle déperdition de température de l'air dans son cheminement jusqu'au carburateur.

**Revendications**

1. Mélangeur de l'air d'admission d'un moteur à combustion interne (1) comportant un boîtier muni d'une tubulure d'entrée d'air chaud (10), d'une tubulure d'entrée d'air frais (11) dans laquelle un volet (20) est maintenu dans une position obturant ladite tubulure sous l'effet de moyens de maintien élastiques (50, 51, 52) et d'une tubulure de sortie d'air mélangé, et comportant des moyens d'actionnement dudit volet (20), caractérisé par le fait qu'il comporte:

une première sonde à cire (21) située dans ladite tubulure d'entrée d'air froid (11) et dont la tige est susceptible de s'allonger lorsqu'elle est soumise à une température supérieure à $t_1$, ladite tige (31) étant associée à des moyens de débrayage desdits moyens de maintien élastiques (50, 51, 52), le volet (20) pouvant être ouvert partiellement d'une façon libre de la charge des moyens de maintien élastiques (50, 51, 52) lorsque la sonde (21) est soumise à une température comprise entre $t_1$ et $t_2$, et ledit volet pouvant être ouvert complètement d'une façon libre de la charge des moyens élastiques (50, 51, 52) lorsque la sonde est soumise à une température supérieure à $t_2$, les moyens d'actionnement dudit volet (20) comprenant une seconde sonde à cire (22), située dans ladite tubulure d'air mélangé (14), dont la tige (32) est susceptible de s'allonger lorsqu'elle est soumise à une température comprise entre $t_3$ et $t_4$, $t_3$ étant supérieure à $t_2$, et associée à une tringlerie coopérant avec ledit volet d'obturation (20) pour permettre l'ouverture de ce dernier, même contre l'effet des moyens de maintien élastiques (50, 51, 52) lorsqu'ils ne sont pas débrayés, si la température de l'air mélangé est supérieure à $t_3$.

2. Mélangeur selon la revendication 1, caractérisé par le fait que lesdites sondes (21, 22) sont choisies de manière que $t_1$ et $t_2$ soient respectivement égales à 10°C et 15°C et que $t_3$ et $t_4$ soient respectivement égales à 22°C et 26°C.

## Patentansprüche

1. Ansaugluftmischer für eine Brennkraftmaschine (1) mit einem Gehäuse, das einen Warmlufteinlaßstutzen (10), einen Frischlufteinlaßstutzen (11), in welchem eine Klappe (20) in einer Stellung gehalten wird, in der der Stutzen mit Hilfe von elastischen Haltemitteln (50, 51, 52) geschlossen ist, und einen Auslaßstutzen für das Gasgemisch sowie Betätigungsmittel für die Klappe (20) aufweist, dadurch gekennzeichnet, daß eine erste Wachssonde (21) im Kaltlufteinlaßstutzen (11) deren Stößel sich bei Temperaturen oberhalb von $t_1$ verlängert, wobei der Stößel (31) Entkupplungsmitteln für die elastischen Haltemittel (50, 51, 52) zugeordnet ist und die Klappe (20) frei von der Belastung durch die elastischen Haltemittel (50, 51, 52) teilweise geöffnet werden kann, wenn die Sonde (21) einer Temperatur zwischen $t_1$ und $t_2$ ausgesetzt ist, und frei von der Belastung durch die elastischen Haltemittel (50, 51, 52) vollständig geöffnet werden kann, wenn die Sonde einer Temperatur über $t_2$ ausgesetzt ist, wobei die Betätigungsmittel für die Klappe (20) eine zweite Wachssonde (22) umfassen, die im Stutzen (14) für das Luftgemisch angeordnet ist und deren Stößel (32) sich verlängert, wenn sie Temperaturen zwischen $t_3$ und $t_4$ ausgesetzt ist, wobei $t_3$ größer als $t_2$ ist, und die weiter mit einem Gestänge in Verbindung steht, welches mit der Verschlußklappe (20) zum Öffnen derselben zusammenwirkt, wenn die Temperatur der vermischten Luft oberhalb von $t_3$ liegt, und zwar selbst gegen die Wirkung der elastischen Haltemittel (50, 51, 52), wenn sie nicht entkuppelt sind.

2. Mischer nach Anspruch 1, dadurch gekennzeichnet, daß die Sonden (21, 22) so gewählt sind, daß $t_1$ und $t_2$ 10°C bzw. 15°C und $t_3$ und $t_4$ 22°C bzw. 26°C betragen.

## Claims

1. An intake air mixer for an internal combustion engine (1) the mixer comprising a housing fitted with a hot air inlet duct (10), a cold air inlet duct (11) in which a flap (20) is maintained by resilient retaining means (50, 51, 52) in a position where it closes said duct, and an outlet duct for mixed air, said mixer further including means for actuating said flap (20) and being characterized by the fact that it comprises: a first wax probe (21) situated in said cold air inlet duct (11) and having a rod liable to be extended when it is subjected to a temperature greater than $t_1$, said rod (31) being associated with means for disengaging said resilient retaining means (50, 51, 52), the flap (20) being capable of being partially opened in a manner which is not subject to the load of the resilient retaining means (50, 51, 52) when the probe (21) is subjected to a temperature lying between $t_1$ and $t_2$, and said flap being capable of being completely opened in a manner which is not subject to the load of the resilient means (50, 51, 52) when the probe is subjected to a temperature greater than $t_2$, the means for actuating said flap (20) comprising a second wax probe (22) situated in said mixed air duct (14), with the rod (32) of the second probe being suitable for extending when the probe is subjected to a temperature lying between $t_3$ and $t_4$, where $t_3$ is greater $t_2$, and being associated with linkage co-operating with said closure flap (20) in order to open said flap, even against the force of the resilient retaining means (50, 51, 52) when not disengaged therefrom, should the temperature of the air mixture be greater than $t_3$.

2. A mixer according to claim 1, characterized by the fact that said probes (21, 22) are selected in such a manner that $t_1$ and $t_2$ are respectively equal to 10°C and to 15°C, and that $t_3$ and $t_4$ are respectively equal to 22°C and to 26°C.

FIG.1

FIG.2

0 196 058

FIG.3

# FIG.4

# FIG.5

0 196 058

# FIG.6

# FIG.7

9

FIG.8